# EUROPÄISCHE PATENTSCHRIFT

(11) **EP 1 152 164 B1**
(45) Veröffentlichungstag und Bekanntmachung des Hinweises auf die Patenterteilung: **24.08.2005**
(21) Anmeldenummer: 00124980.4
(22) Anmeldetag: 16.11.2000
(51) Int. Cl.: F16D 65/12, C22C 38/22

(54) **Bremsscheibe für Motorfahrzeuge sowie Stahllegierung und Verfahren zu ihrer Herstellung**
Brake disc for motor vehicles, steel alloy and method for manufacturing said disc
Disque de frein pour véhicules automobiles, alliage d'acier et méthode pour la fabrication d'un tel disque

(30) Priorität: 24.03.2000 DE 10014856
(43) Veröffentlichungstag der Anmeldung: 07.11.2001
(73) Patentinhaber: Grimm, Walter, 35606 Solms (DE)
(72) Erfinder: Grimm, Walter, 35606 Solms (DE)
(74) Vertreter: Jochem, Bernd

(56) Entgegenhaltungen:
- EP-A- 1 106 705
- DE-A- 3 426 882
- DE-A- 3 515 198
- DE-A- 19 832 430
- DE-A- 19 941 411
- US-A- 2 848 323
- PATENT ABSTRACTS OF JAPAN vol. 009, no. 184 (C-294), 30. Juli 1985 (1985-07-30) & JP 60 052562 A (SUMITOMO KINZOKU KOGYO KK), 25. März 1985 (1985-03-25)

## Beschreibung

Die Erfindung bezieht sich auf ein Verfahren zur Herstellung einer Bremsscheibe für Motorfahrzeuge, insbesondere Personenkraftwagen (PKW) und Motorräder.

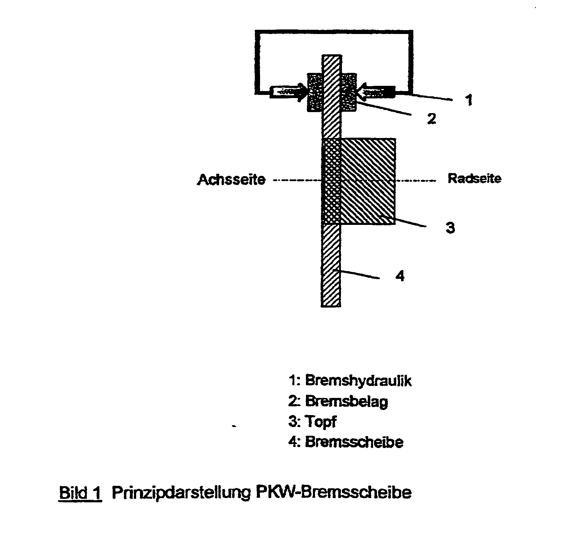

PKW-Bremsscheiben bestehen aus einem ein- oder zweiteiligen Bremsring (Bremsscheibe massiv oder belüftet), der mit einer topfförmigen Nabe verbunden ist (Bild 1). Die Bremsscheibe wird über den Topf auf der Achse befestigt und ist über eine Verschraubung gleichzeitig fest mit dem Rad verbunden. Durch Betätigung der Bremse über hydraulischen Druck erfolgt beidseitiger Reibungskontakt zwischen Bremsring und Bremsbelägen. Die dabei, unabhängig vom Bremsdruck und der Umfangsgeschwindigkeit entstehende Reibungswärme wird über den Bremsring und die Nabe abgeführt. Je nach Fahrsituation können bei Personenkraftwagen Maximaltemperaturen von 600 bis 800 °C an der Oberfläche der Bremsscheiben erreicht werden. Bei Nässe kann anschliessend eine rapide Abkühlung der Bremsscheibe erfolgen. Durch mehrfach hintereinander erfolgendes Bremsen entstehen in der Bremsscheibe, insbesondere im Bremsring, Temperaturwechselbelastungen, die gemeinsam mit mechanischem Abrieb und Korrosion zu Werkstoffschädigungen und zur Begrenzung der Lebensdauer führen.

Bremsscheiben für PKW werden heute üblicherweise aus Gußeisen mit lamellarem Graphit hergestellt mit ca. 2,5 - 4,0 % Kohlenstoff, 1,8 - 2,5 % Silizium, 0,3 - 1,0 % Mangan sowie weiteren Legierungselementen im Spurenbereich. Vorteile der Gußbremsscheibe sind relativ niedrige Fertigungskosten und die im Vergleich zu Stahl ungefähr doppelt so hohe Wärmeleitfähigkeit, die zu hoher thermischer Belastbarkeit mit gutem Bremsverhalten beiträgt. Nachteile der Gußeisen-Bremsscheiben sind aber ihre unzureichende Korrosionsbeständigkeit, die hohe Verschleißanfälligkeit, ein relativ hohes Gewicht sowie optische Defizite durch Korrosion.

Der Erfindung liegt deshalb die Aufgabe zugrunde, ein Verfahren zur Herstellung einer korrosionsbeständigeren Bremsscheibe für Motorfahrzeuge zur Verfügung zu stellen und dabei gegenüber PKW-Gußbremsscheiben ein mindestens gleichwertiges Bremsverhalten sicherzustellen, durch höhere Verschleißfestigkeit eine höhere Lebensdauer zu erzielen, Gewichtseinsparungen zu realisieren und eine bei speichenartigen Rädern erwünschte bessere metallische Optik zu erreichen. Weiterhin muss bei PKW-Bremsscheiben sichergestellt sein, dass bei Extrembremsungen mit hoher thermischer Belastung keine kritische Rißbildung, keine Deformationen der Bremsscheibe und kein Nachlassen der Bremswirkung auftreten.

Im Vergleich zu Edelstahlbremsscheiben, die heute üblicherweise im Motorradbereich Verwendung finden, jedoch gegenüber PKW-Bremsen deutlich geringer belastet sind, war die Aufgabenstellung der Erfindung, ein Verfahren zu finden, das zu einer Bremsscheibe mit höherer Korrosionsbeständigkeit gegenüber wässriger Salzsäure, höherer Verschleißfestigkeit und besserer Temperaturwechselbeständigkeit (Rißwiderstand bei Temperaturwechselbelastung) führt.

Die erfindungsgemäße Lösung der Aufgabenstellung ist gekennzeichnet durch die folgenden Schritte:
- Verwendung eines Stahles mit der Zusammensetzung:
   0,1 - 0,4 % Kohlenstoff
   bis zu 1,0 % Silizium
   bis zu 2,0 % Mangan
   bis zu 0,02 % Schwefel
   11 - 16 % Chrom
   bis zu 1,0 % Nickel
   0,5 - 1,5 % Molybdän,
   und im übrigen Eisen und herstellungsbedingte Verunreinigungen, wobei die Anteile von Kohlenstoff und Chrom so abgestimmt werden, daß die Bildung von Primärkarbiden und Deltaferrit-Ausscheidungen vermieden werden,
- Walzen des Stahls und Weichglühen des Stahlbandes,
- Stanzen oder Feinschneiden von Scheiben aus dem Stahlband,
- Wärmebehandlung des Stahls, um seine Festigkeit einzustellen.

Nach dem Gießen wird der Stahl durch Walzen oder Schmieden verdichtet und wärmebehandelt. Die Weiterverarbeitung erfolgt vorzugsweise durch Walzen von Warmband und Kaltband und Weichglühen des Bandstahles.

Die Herstellung der Bremsscheiben erfolgt anschließend durch einen Stanz- oder Feinschneidprozess. Die Verbindung zwischen Bremsring und Topf kann durch Tiefziehen, Schweißen, Gießen, Fügen, Schrauben oder Nieten erfolgen. Bei 2-teiligen Bremsscheiben (innenbelüftet) erfolgt ein Zusammenbau von 2 einzeln gefertigten Scheiben durch Anwendung von bekannten geeigneten Verbindungstechniken. Zur Gewichtsreduzierung kann dabei der Topf auch aus einem Leichtbauwerkstoff hergestellt werden.

Bei dem erfindungsgemäßen Stahltyp handelt es sich, abweichend von korrosionsbeständigen Motorradbremsscheiben-Stählen um einen molybdänlegierten, martensitischen Chromstahl (siehe Tabelle 1).

Das für PKW-Bremsscheiben geeignete Eigenschaftsprofil resultiert dabei aus einer besonderen Abstimmung von Kohlenstoff- und Chrom-Gehalt sowie dem gleichzeitigen Zulegieren von Molybdän und vorzugsweise auch Mangan und Nickel in den angegebenen Grenzen.

Der Kohlenstoffgehalt ist so gewählt, dass in ausreichendem Maße Karbide zur Erhöhung von Härte, Verschleißfestigkeit und Warmfestigkeit gebildet werden, versprödende Primärkarbide und Deltaferrit-Ausscheidungen jedoch vermieden werden. Wenn ein Stahl, wie in der US-A-2848323 beschrieben, zusätzlich zu den genannten Legierungsbestandteilen auch noch Wolfram, Vanadium und Niob als starke Karbidbildner enthält, werden die Verarbeitungseigenschaften, insbesondere das Warmwalzen, und die Korrosionsbeständigkeit stark beeinträchtigt, während die Materialkosten beträchtlich ansteigen, so daß ein solcher Stahl für Bremsscheiben nicht in Frage kommt.

Der Anteil von Chrom gewährleistet, dass trotz des geregelten Kohlenstoffgehaltes, d.h. über die Chromkarbidphase hinaus, ein ausreichend hoher Chromanteil in der Eisenmatrix gelöst bleibt um die gewünschte Korrosionsbeständigkeit zu erhalten.

Molybdän führt zu erhöhter Beständigkeit gegen Korrosion durch Salzsäure und verbessert Warmfestigkeit und Warmverschleißbeständigkeit.

Nickel und Mangan erhöhen die Zähigkeit.

Silizium wird zur Desoxidation des Stahles verwendet, wobei der Anteil vorzugsweise nur bis zu 0,5 % beträgt.

Schwefel wird metallurgisch aus dem Stahl entfernt zur Sicherstellung isotroper Werkstoffeigenschaften und zur Gewährleistung guter Kaltumform- und Feinschneideigenschaften. Vorzugsweise ist der Anteil auf bis zu 0,005 % begrenzt.

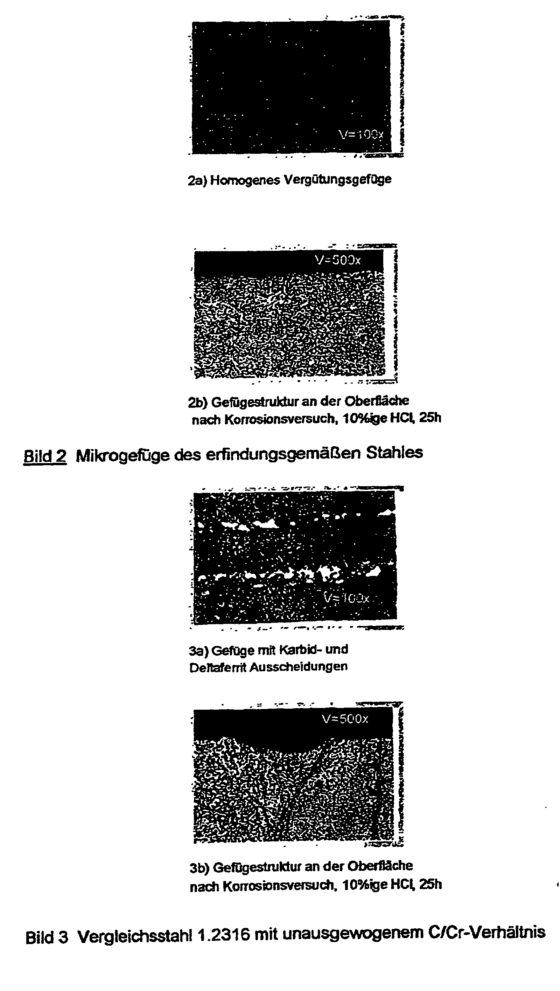

Ein Stahl mit einer ähnlichen Analysenlage wird für korrosionsbeständige Kunststoffformen eingesetzt (s. Stahl 1.2316 in Tabelle 1). Je nach Verschleißbedingungen wird dort die Festigkeit durch Härten und Anlassen zwischen 900 und 1700 N/mm² eingestellt. Demgegenüber wird der erfindungsgemäße Stahl durch Absenkung des Kohlenstoffgehaltes und gleichzeitige Anpassung des Chromgehaltes für einen Einsatzfestigkeitsbereich von 600 - 1000 N/mm² ausgelegt. Außerdem werden dadurch bestmögliche Kaltumformeigenschaften und eine homogene Gefügestruktur erreicht. Durch die für den bestimmungsgemäßen Einsatz optimale Anpassung des C/Cr-Verhältnisses kann die Bildung von schädlichen Primärkarbid- und Deltaferritausscheidungen vermieden werden (s. Bild 2 und 3). Diese Ausscheidungen würden die Verarbeitbarkeit durch Kaltumformung verschlechtern und darüber hinaus die Korrosionsbeständigkeit verringern.

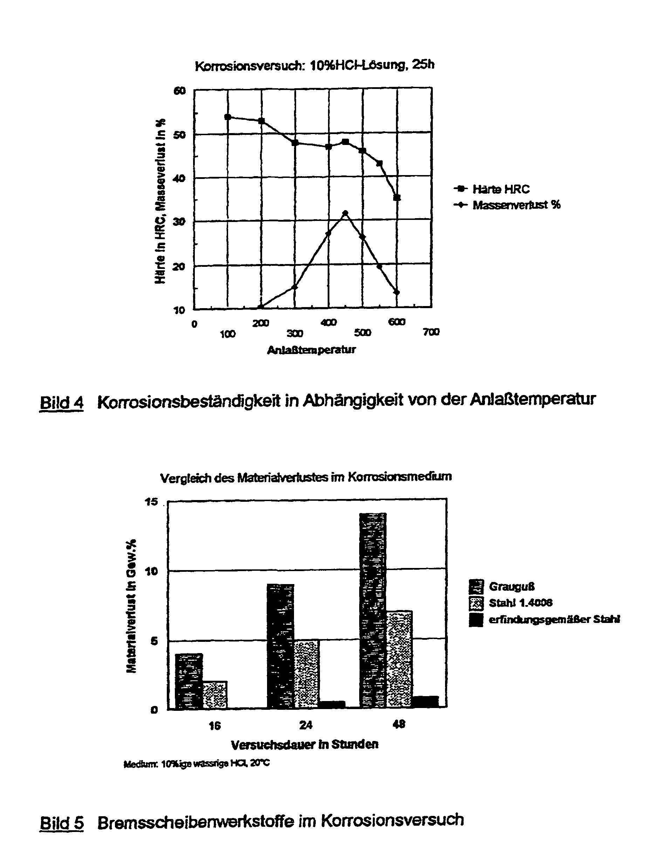

Die höchste Korrosionsbeständigkeit gegenüber Salzsäure (HCl) wird bei dem erfindungsgemäß vorgesehenen Stahl erreicht bei Anwendung von Anlasstemperaturen über 650 °C, woraus Festigkeiten für Bremsscheiben ≤ 1000 N/mm² resultieren (siehe Bild 4).

Das Ergebnis eines 24-Stunden Korrosionsversuchs in 10 %iger Salzsäure bei 20 °C mit den Bremsscheibenwerkstoffen Grauguß GG15, Motorradbremsscheibenstahl X12Cr13, vergütet auf 1200 N/mm² und dem erfindungsgemäßen Stahl, angelassen auf 900 N/mm² zeigt Bild 5. Dabei sollten die Korrosionsverhältnisse unter Einwirkung von Tausalzlösung bei extremen winterlichen Bedingungen simuliert werden.

Die Korrosionsbeständigkeit nach 48 h Versuchszeit ist beim erfindungsgemäßen Stahl gegenüber Grauguß um Faktor 18 besser und um Faktor 9 im Vergleich zum Motorrad-Bremsscheibenstahl 1.4006.

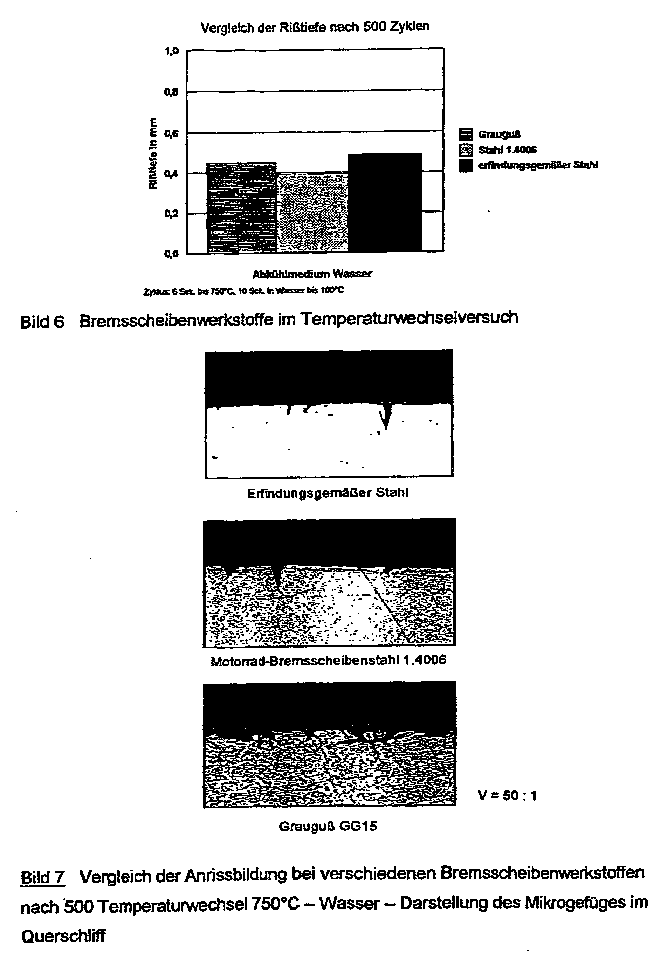

Der Werkstoffvergleich im Temperaturwechselversuch unter schärfsten Bedingungen mit Simulation von 500 Zyklen Gewaltbremsung bis 750 °C Oberflächentemperatur und anschließender Wasserabkühlung bis 100 °C ist in Bild 6 dargestellt. Die maximale Rißtiefe der drei Bremsscheibenwerkstoffe liegt auf einem vergleichbaren Niveau. Das bedeutet, dass der erfindungsgemäße Stahl auch unter extremen Bremsbedingungen keine Neigung zu kritischer Rissbildung zeigt und unter diesem Gesichtspunkt als den bewährten Bremsscheibenwerkstoffen gleichwertig einzustufen ist. Der Vergleich der Anrißstruktur ist in Bild 7 dargestellt.

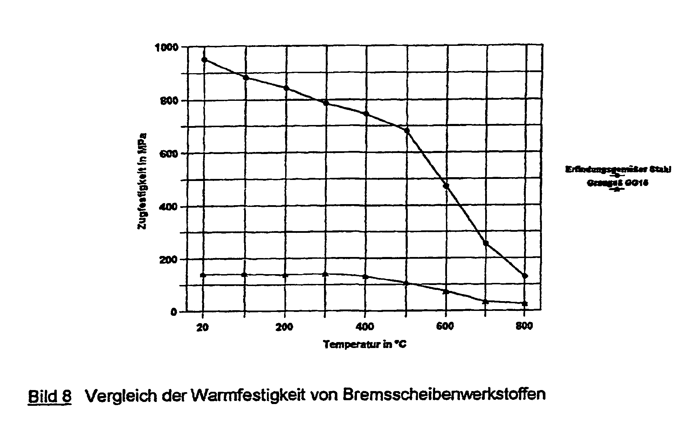

In Bild 8 ist ein Vergleich der Warmfestigkeit des Gußwerkstoffes GG15 und des erfindungsgemäß vorgesehenen Stahls dargestellt. Aufgrund der markant höheren Warmfestigkeit (Faktor 5-7) sind höhere Bauteilfestigkeit und Verschleißbeständigkeit gegeben. Die höheren Festigkeitswerte können als Grundlage für Gewichtsreduzierungen gegenüber Grauguß-Bremsscheiben genutzt werden. Andererseits können höhere Bauteilfestigkeiten Nachteile des Stahl-Werkstoffes gegenüber Grauguß bezüglich der Wärmeleitfähigkeit kompensieren (Differenz Faktor 2).

In Bremsversuchen wurden gegenüber herkömmlichen Guß-Bremsscheiben bei Verwendung des erfindungsgemäßen Stahles gleichwertige oder bessere Bremseigenschaften nachgewiesen.

**Tabelle 1**

| Vergleich der chemischen Zusammensetzung von Werkstoffen für Bremsscheiben | | | | | | | | |
|---|---|---|---|---|---|---|---|---|
| Werkstoff | % C | % Si | % Mn | % S | % Cr | % Ni | % Mo | Sonstiges |
| Gußeisen für Bremsscheiben | 2,5-4,0 | 1,8-2,5 | 0,3-1,0 | | <0,5 | <0,5 | <0,5 | *) |
| Motorrad-Bremsscheiben Stahl | ≤0,20 | <1,0 | <2,5 | <0,015 | 10,0-15,0 | <1,0 | - | *) |
| Erfindungsgemäßer Bremsscheiben Stahl | 0,2-0,3 | <1,0 | <1,5 | <0,005 | 12,0-15,0 | <1,0 | 0,6-1,2 | *) |
| Kunststoffformenstahl Werkstoff-No. 1.2316 | 0,33-0,43 | ≤1,0 | ≤1,0 | ≤0,030 | 15,0-17,0 | ≤1,0 | 1,0-1,3 | *) |

| | | | | | | | | |
|---|---|---|---|---|---|---|---|---|
| *) Eisen und herstellungsbedingte Spurenelemente und Verunreinigungen | | | | | | | | |

## Patentansprüche

1. Verfahren zur Herstellung einer Bremsscheibe für Motorfahrzeuge, insbesondere Personenkraftwagen und Motorräder, **gekennzeichnet durch** die folgenden Schritte:
- Verwendung eines Stahles mit der Zusammensetzung
0,2 - 0,3 % Kohlenstoff
bis zu 1 % Silizium
bis zu 1,5 % Mangan
bis zu 0,01 % Schwefel
12 - 15 % Chrom
bis zu 1,0 % Nickel
0,6 - 1,2 % Molybdän
und im übrigen Eisen und herstellungsbedingte Verunreinigungen, wobei die Anteile von Kohlenstoff und Chrom so abgestimmt werden, daß die Bildung von Primärkarbiden und Deltaferrit-Ausscheidungen vermieden werden,
- Walzen des Stahls und Weichglühen des Stahlbandes,
- Stanzen oder Feinschneiden von Scheiben aus dem Stahlband,
- Wärmebehandlung des Stahls, um seine Festigkeit einzustellen.

2. Verfahren nach Anspruch 1, **dadurch gekennzeichnet, daß** die Festigkeit des Stahls durch Härten und Anlassen mit Anlaßtemperaturen über 650°C auf Werte zwischen 600 und 1000 N/mm² eingestellt wird.

3. Verfahren nach Anspruch 1, **dadurch gekennzeichnet, daß** die Scheiben durch Kaltumformen, wie Tiefziehen, weiterverarbeitet werden.

## Claims

1. A method for producing a brake disk for motor vehicles, in particular passenger cars and motorbikes, **characterised by** the following steps:
- use of a steel with the composition
0,2 to 0,3 % carbon
up to 1,0 % silicon
up to 1,5 % manganese
up to 0,01 % sulfur
12 - 15 % chromium
up to 1,0 % nickel
0.6 - 1.2 % molybdenum,
the remainder being iron and production-related impurities, wherein the carbon and chromium content is selected so that the formation of primary carbides and delta ferrite precitpitations are prevented,
- rolling of the steel and soft annealing of the steel strip,
- punching or precision cutting of discs from the steel strip,
- heat-treatment of the steel in order to set its strength.

2. The method of claim 1, **characterised in that** the strength of the steel is set to 600 to 100 N/mm² by means of hardening and tempering with tempering temperatures over 650°C.

3. The method of claim 1, **characterised in that** the disks are further processed by cold forming, such as deep drawing.

## Revendications

1. °) Procédé de fabrication d'un disque de frein pour des véhicules à moteur, en particulier des véhicules de tourisme et des motocyclettes, **caractérisé par** les étapes suivantes :
- utilisation d'un acier présentant la composition suivante
0,2 à 0,3 % de carbone
jusqu'à 1 % de silicium
jusqu'à 1,5 % de manganèse
jusqu'à 0,01 % de soufre
12 à 15 % de chrome
jusqu'à 1 % de nickel
0,6 à 1,2 % de molybdène
le reste étant constitué de fer et d'impuretés liées à la fabrication, les taux de carbone et de chrome étant accordés de manière à éviter la formation de carbure primaire et des précipitations de deltaferrite,
- laminage de l'acier et recuit de la bande d'acier,
- estampage ou découpage de précision effectué sur la bande d'acier,
- traitement thermique de l'acier pour ajuster sa résistance.

2. Procédé selon la revendication 1,
**caractérisé en ce que**
la résistance de l'acier est réglée à des valeurs comprises entre 600 et 1000 N/mm² au moyen d'une trempe et d'un revenu effectué à des températures dépassant 650°C.

3. selon la revendication 1,
**caractérisé en ce que**
les disques sont soumis à un usinage ultérieur par déformation à froid, telle qu'un emboutissage profond.
